(19) Europäisches Patentamt
European Patent Office
Office européen des brevets

(11) **EP 1 927 923 A2**

(12) **EUROPEAN PATENT APPLICATION**

(43) Date of publication:
**04.06.2008 Bulletin 2008/23**

(51) Int Cl.:
***G06F 17/24*** (2006.01)     ***G06F 17/21*** (2006.01)

(21) Application number: **07254653.4**

(22) Date of filing: **30.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **01.12.2006 JP 2006325885**

(71) Applicant: **Seiko Epson Corporation Tokyo 160-0811 (JP)**

(72) Inventor: **Yamakado, Hitoshi Nagano 392-8502 (JP)**

(74) Representative: **Cloughley, Peter Andrew Miller Sturt Kenyon 9 John Street London WC1N 2ES (GB)**

(54) **Document edit support device, document edit device, program and computer-readable storage medium**

(57) A document edit support device includes: obtaining means for obtaining an object, the object being data showing at least one of a text and an image included in a document to be edited; important area determining means for determining an important area, the important area being a part of an area of the document; grid line generating means for generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and display means for displaying the grid line generated by the grid line generating means.

*FIG. 1*

EP 1 927 923 A2

**Description**

BACKGROUND

Technical Field
The present invention relates to a technique for editing a document or supporting the editing.
Related Art
Technology to edit or generate a document using a computer device to layout an object (or digital content) in an area is known. A so-called "grid line" is used as a guide line to layout an object (see JP-A-8-194832, JP-T-2003-523014, JP-A-2006-189989, JP-A-64-017156, and JP-A-3-269678, for example).
JP-A-8-194832 discloses a technique for changing a size of a grid line in a specific area. JP-T-2003-523014 discloses a technique for changing the configuration of a grid line in response to inputted parameters such as number of characters, type of font, font size, and number of multiple columns in a system displaying characters in a composition. JP-A-2006-189989 discloses a technique for smoothly moving an object by selecting a grid line to which the object adheres in response to a direction of the move when a user drags the object by operating a mouse. JP-A-64-017156 and JP-A-3-269678 disclose a system for selecting a grid line from among plural grid lines and a system for setting a desired grid line.
According to the references, a grid line having a well-balanced position, in other words, a beautiful layout cannot be generated. For example, according to JP-A-8-194832, although the size of a grid line is changeable, a user cannot know what size of a grid line is well-balanced. According to JP-T-2003-523014, to obtain a well-balanced grid line, a user must have knowledge and experience of inputting appropriate parameters. According to JP-A-2006-189989, an object can move smoothly, but cannot be moved to a well-balanced position automatically. According to JP-A-64-017156 and JP-A-3-269678, it is difficult for a user to select a well-balanced grid line.

SUMMARY

The invention enables generation of a well-balanced grid line independently from a user's knowledge and experience.
According to an aspect of the invention, there is provided a document edit support device, including: obtaining means for obtaining an object, the object being data showing at least one of a text and an image included in a document to be edited; important area determining means for determining an important area, the important area being a part of an area of the document; grid line generating means for generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and display means for displaying the grid line generated by the grid line generating means.
According to the a document edit support device, a grid line is generated on the basis of the golden ratio.
It is preferable that the document may include a plurality of objects, and the display means may be configured to display the grid line if at least a part of the grid line overlaps with an object that is outside the important area.
It is preferable that the document may include a plurality of objects, and the display means may be configured to display the grid line if at least a part of the grid line overlaps an $n$ % magnified object ($n$ is a real number that satisfies $n > 0$).
It is preferable that the document may include a plurality of objects, each object may have attribute information showing an attribute of the object, and the important area determining means may be configured to determine the important area on the basis of the attribute information, the important area including at least one of the plurality of objects.
It is preferable that the grid line generating means may be configured to generate the grid line around the important area.
According to another aspect of the invention, there is provided a document edit device, including: the above document edit support device, the document including a plurality of objects; and editing means for editing a position of an object of the document so as to be tangent to the nearest grid line.
According to yet another aspect of the invention, there is provided a document edit device, including: the document edit support device according to any one of Claims 1-5, the document including a plurality of objects; and editing means for editing a position of an object of the document in accordance with an instruction inputted by a user.
According to yet another aspect of the invention, there is provided a program causing a computer device having display means to execute a process, the process including: obtaining an object, the object being data showing at least one of a text and an image included in a document to be edited; determining an important area, the important area being a part of an area of the document; generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and displaying on the display means the grid line.

According to yet another aspect of the invention, there is provided a computer-readable storage medium storing a program causing a computer device having display means to execute a process, the process including:

obtaining an object, the object being data showing at least one of a text and an image included in a document to be edited; determining an important area, the important area being a part of an area of the document; generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and displaying on the display means the grid line.

BRIEF DESCRIPTION OF THE DRAWINGS

The invention will be described with reference to the accompanying drawings, wherein like numbers refer to like units:
FIG. 1 shows a functional configuration of a document edit device 100 in accordance with a first embodiment of the invention;
FIG. 2 shows a hardware configuration of the document edit device 100;
FIG. 3 shows a flowchart illustrating an operation of the document edit device 100;
FIG. 4 shows a document $D_1$, which is an example of a target to be edited;
FIG. 5 shows a flowchart illustrating details of a grid line generating process in step S110;
FIG. 6 shows an example of the generated grid lines;
FIG. 7 shows another example of the generated grid lines;
FIG. 8 shows an example of the displayed grid lines;
FIG. 9 shows another example of the displayed grid lines;
FIG. 10 shows a flowchart illustrating an operation of the document edit device 100 in accordance with the second embodiment;
FIG. 11 shows a flowchart illustrating a detail of the adhering process in step S200; and
FIG. 12 shows a flowchart illustrating an operation of the document edit device 100 in accordance with the third embodiment.

DESCRIPTION OF EXEMPLARY EMBODIMENTS

1. First embodiment
1-1. Configuration

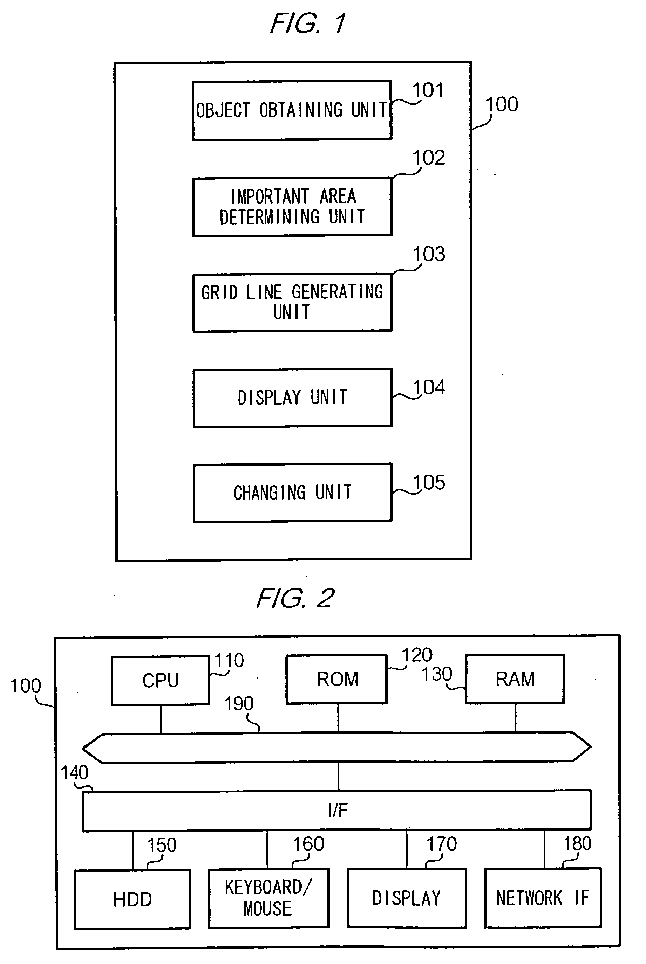

FIG. 1 shows a functional configuration of a document edit device 100 in accordance with a first embodiment of the invention. The document edit device 100 has a function of supporting editing of a document as well as editing a document. Here, a term "document" refers to data showing at least one object laid-out in a layout area and layout information showing a layout of a document in the layout area, or a product outputted on the basis of the data. A term "object" refers to data showing at least one of a text (character strings) and an image, or a text or an image shown by the data. A term "layout area" refers to an area corresponding to a physical boundary of an outputted document. The layout area is, for example, one or plural sheets of paper, a page, plural continuous pages, or a part of a page.
An object obtaining unit 101 obtains an object (a digital content). The object obtaining unit 101 may obtain an object from a storage unit (not shown in the figures) or a device other than the document edit device 100. An important area determining unit 102 determines an important area. A term "important area" refers to a part of a document. The important area determining unit 102 may determine an important area in response to an instruction by a user. Alternatively, the important area determining unit 102 may automatically determine the important area in accordance with a predetermined algorithm.
A grid line generating unit 103 calculates a parameter for identifying a grid line, in other words, generates a grid line. A grid line is a line that divides a distance between two reference lines by a golden ratio. Here, the golden ratio is expressed by the equation (1) shown below. In equation (1), the right term and the left term may be exchanged with each other. A reference line is defined on the basis of at least one of a figure or a position of the object or figures of the layout area. Also, the grid line generating unit 103 generates a grid line having a specific positional relationship with the important area.
$$1 : \frac{1+\sqrt{5}}{2} \qquad \cdots (1)$$

A display unit 104 displays a document and a grid line. A changing unit 105 changes a position of an object in a document. The change of the position may be carried out in response to an instruction by a user. Alternatively, the change of the position may be carried out automatically in accordance with a predetermined algorithm. The document edit device 100 outputs a document edited as described above.
FIG. 2 shows a hardware configuration of the document edit device 100. A CPU (Central Processing Unit) 110 is a control device that controls an element of the document edit device 100. A ROM (Read Only Memory) 120 is a storage device that stores a program and data used to boot the document edit device 100. A RAM (random access memory) 130 is a storage device that functions as a work area when the CPU 110 executes a program. An I/F 140 is an interface that inputs/outputs data or a signal from/to an input device, an output device, or a storage device. A HDD (Hard Disk Drive) 150 is a storage device that stores various programs and data. In the present embodiment, the HDD 150 stores a document edit program that generates a grid line. A keyboard/mouse 160 is an input device by which a user inputs an instruction to the document edit device 100. A display 170 is an output device that displays content of data and information relating to a processing. In the present embodiment, the display 170 displays an object, a layout area, and a grid line. A network IF 180 is an interface used to communicate data with another device connected via a network (not shown in the figures). The document edit device 100 may receive a document (more specifically, data showing the document) via the network and the network IF 180. The CPU 110, ROM 120, RAM 130 and I/F 140 are connected via a bus 190 to each other. The document edit device 100 has the functions shown in FIG. 1 by the CPU 110 executing the document edit program. It is to be noted that the document edit device 100 may be any kind of a device as long as the device has the functional configuration shown in FIG. 1 and the hardware configuration shown in FIG. 2. For, example, the document edit device 100 may be a personal computer. Alternatively, the document edit device 100 may be an image forming device such as a printer.

1-2. Operation

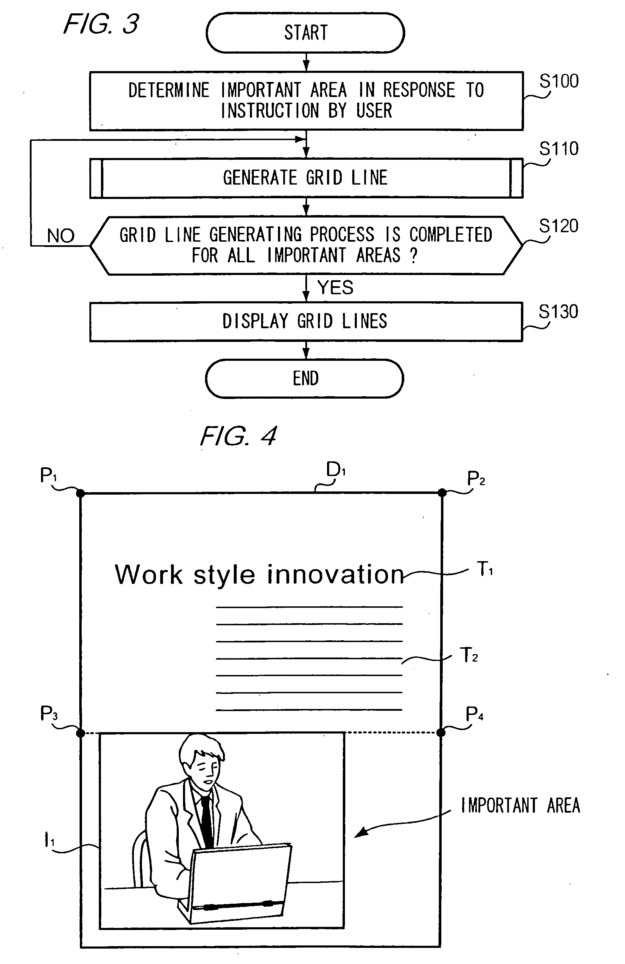

FIG. 3 shows a flowchart illustrating an operation of the document edit device 100. Prior to the flow shown in FIG. 3, the document edit device 100 obtains a document that is a target of editing. The document may be obtained via any kind of a path. For example, the CPU 110 of the document edit device 100 may obtain a document from the HDD 150. Alternatively, the CPU 110 may obtain a document via a network and the network IF 180. Further, instead the CPU 110 may obtain a document in response to an input via the keyboard/mouse 160 by a user.

In step S100, the CPU 110 determines an important area in response to an instruction by a user. The user operates the keyboard/mouse 160 and identifies as the important area an object included in the document.

In step S 110, the CPU 110 generates a grid line that devices a blank area at the golden ratio. Here, a term "blank area" refers to an area around the important area.

FIG. 4 shows a document $D_1$, which is an example of a target to be edited. The document $D_1$ is a document having a single page. The document $D_1$ includes a title $T_1$ "work style innovation", a text body $T_2$ and an image $I_1$. Here, an example in which the image $I_1$ is identified as an important area will be described.

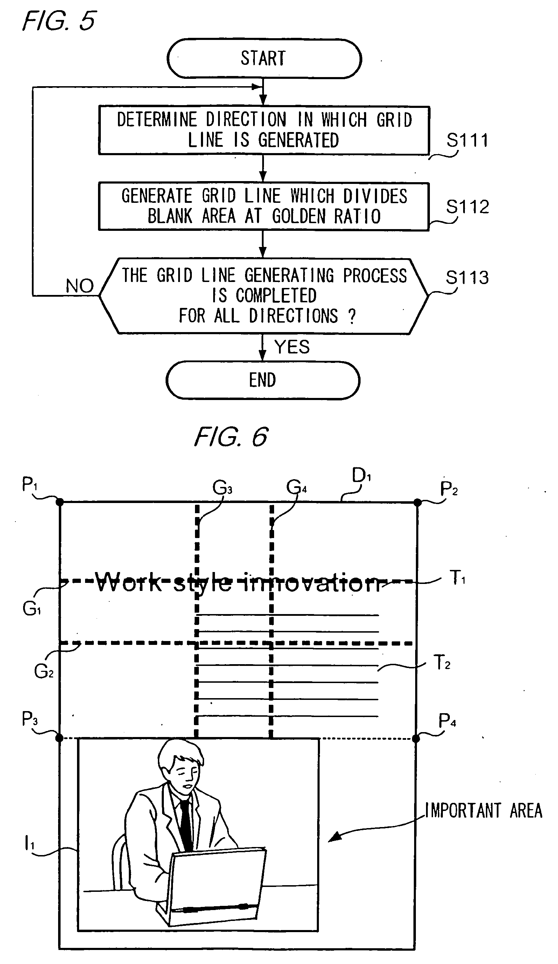

FIG. 5 shows a flowchart illustrating details of a grid line generating process in step S110. In step S111, the CPU 110 determines a direction in which a grid line is generated. For example, the CPU 110 determines to generate a grid line in four directions, up, down, right and left of the important area. Alternatively, the CPU 110 may determine to generate a grid line in a direction that satisfies a predetermined condition. The condition is, for example, that the area of the blank area is greater than or equal to a threshold. Alternatively, the condition may be that the width or height of the blank area is greater than or equal to a threshold. Here, description will be given for an example in which areas of the left, right and down blank area of the important area (the image $I_1$) are less than the threshold and the CPU 110 determines to generate a grid line only in an up direction.

In step S 112, the CPU 110 generates a grid line which divides the blank area at the golden ratio. The up blank area is an area defined by corners $P_1$ and $P_2$ of the page of document $D_1$, and intersections $P_3$ and $P_4$ that are intersections of a line and left and right sides of the page, the line being parallel to an upper side of the page and being in contact with (tangent to) the upper edge of the important area (refer to FIG. 4). The CPU 110 selects as the reference lines two opposite sides from among the sides of the blank area. Here, four grid lines, two of which are generated on the basis of reference lines $P_1P_3$ and $P_2P_4$, the other two are generated on the basis of reference lines $P_1P_2$ and $P_3P_4$.

In step S 113, the CPU 110 determines whether the grid line generating process is completed for all directions to which it is determined to generate a grid line. If it is determined that there is a direction to which the grid line generating process is not completed (S113:NO), the CPU 110 repeats the process in steps S111 - S 113. If it is determined that the grid line generating process is completed for all directions to which it is determined to generate a grid line (S 113: YES), the CPU 110 terminates the operation shown in FIG. 5.

Referring to FIG. 3 again, in step S120, the CPU 120 determines whether the grid line generating process is completed for all important areas. If it is determined that there is an important area to which the grid line generating process is not completed (S120: NO), the CPU 120 repeats the operation in step S110. If it is determined that the grid line generating process is completed for all important areas (S120: YES), the CPU 120 proceeds to the operation in step S130.

In step S130, the CPU 120 displays on the display 170 the generated grid lines.

FIG. 6 shows an example of the generated grid lines. Grid lines $G_1$ and $G_2$ are generated by using lines $P_1P_2$ and $P_3P_4$ as the reference lines, and grid lines $G_3$ and $G_4$ are generated by using lines $P_1P_3$ and $P_2P_4$ as the reference lines. The CPU 110 displays on the display 170 these grid lines as well as the document $D_1$.

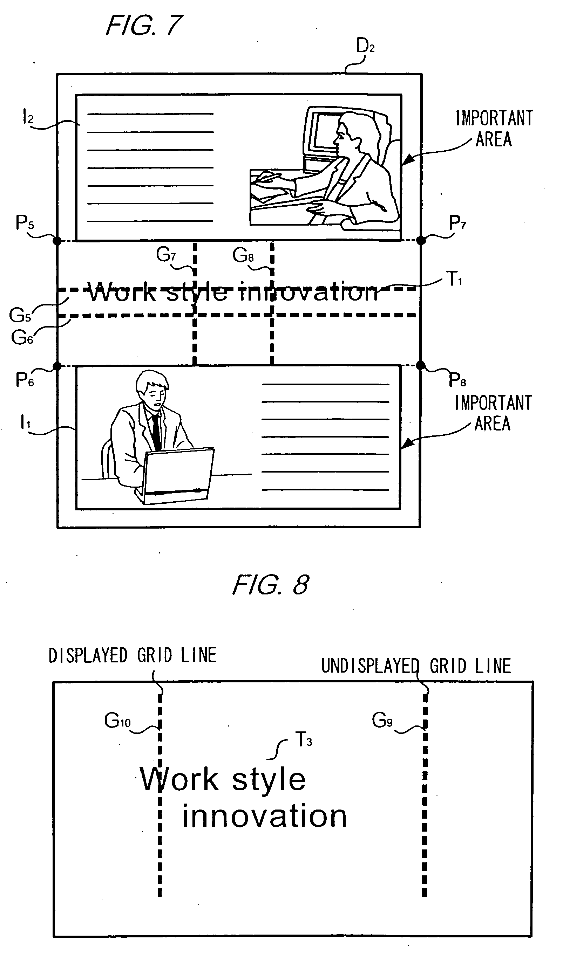

FIG. 7 shows another example of the generated grid lines. FIG. 6 shows an example in which a single object is specified as the important area. On the contrary, FIG. 7 shows an example in which plural objects, images $I_1$ and $I_2$ of a document $D_2$, are specified as the important areas. In this case, the blank area is defined by points $P_5$, $P_6$, $P_7$ and $P_8$. The points $P_5$ and $P_7$ are intersections of an extended line of the down side of the image $I_2$ and the right and left side of the page of document $D_2$, respectively. The points $P_6$ and $P_8$ are intersections of an extended line of the up side of the image $I_1$ and the right and left side of the page of document $D_2$, respectively. Grid lines $G_7$ and $G_8$ are generated by using lines $P_5P_6$ and $P_7P_8$ as the reference lines, and grid lines $G_5$ and $G_6$ are generated by using lines $P_5P_7$ and $P_6P_8$ as the reference lines, respectively. The CPU 110 displays on the display 170 these grid lines as well as the document $D_2$.

When displaying grid lines, only a part of the grid lines that satisfies a predetermined condition may be displayed. For example, the CPU 110 may display on the display 170 only grid lines that overlap onto an object located outside the important area. Alternatively, the CPU 110 may display on the display 170 only grid lines that overlap onto an area that is obtained by *n* % magnifying an object located outside the important area.

FIG. 8 shows an example of the displayed grid lines. In this example, grid lines $G_9$ and $G_{10}$ are generated. The grid line $G_{10}$ overlaps onto an object $T_3$ which is outside the important area, but the grid line $G_9$ does not overlap onto any object. In this case, the CPU 110 displays only the grid line $G_{10}$ and does not display the grid line $G_9$.

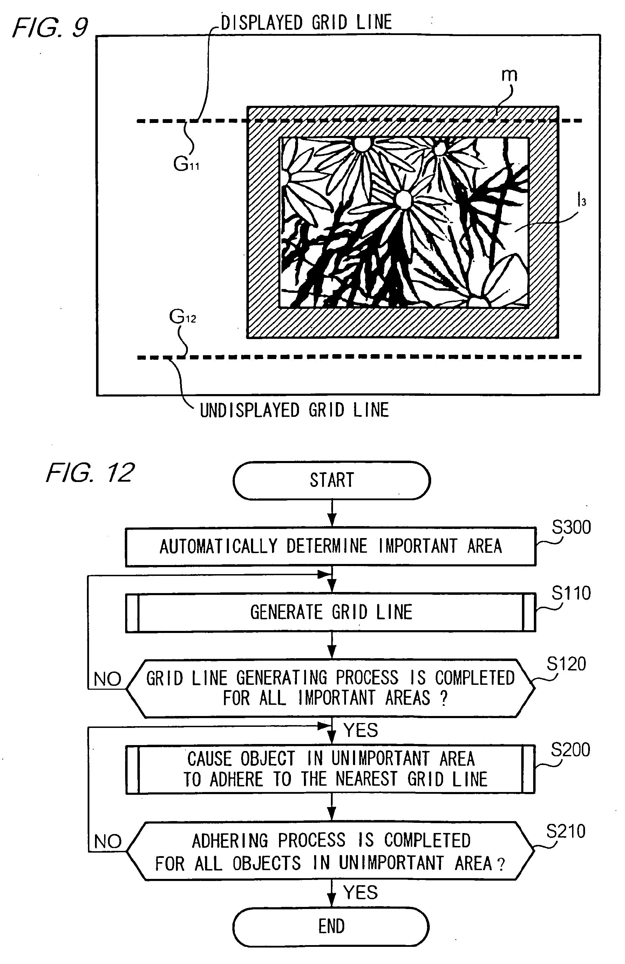

FIG. 9 shows another example of the displayed grid lines. In this example, grid lines $G_{11}$ and $G_{12}$ are generated. An area m is an area of 20 % magnified object $I_3$, which is an important area. The grid line $G_{11}$ overlaps onto the area m which is outside the important area, but the grid line $G_{12}$ does not overlap onto the area m. In this case, the CPU 110 displays only the grid line $G_{11}$ and does not display the grid line $G_{12}$.

A user may determine a position of an object on the basis of the displayed grid lines. For example, a user may determine a position of an object so that the object comes into contact with at least one grid line. A user may input via the keyboard/mouse 160 the position of the object.

As described above, the present embodiment provides a grid line generated on the basis of the golden ratio and determining a position of an object by using the grid line. In other words, a user can determine a well-balanced, beautiful layout of the object.

2. Second embodiment
Next, a second embodiment of the invention will be described. In the following description, elements common with the first embodiment will be omitted. Also, common reference numerals will be used for elements common with the first embodiment. In the second embodiment, an object automatically adheres to a grid line. Here, the term "adhere" refers to a process of generating a relationship between an object and a grid line and specifying a relative positional relationship between the object and the grid line.

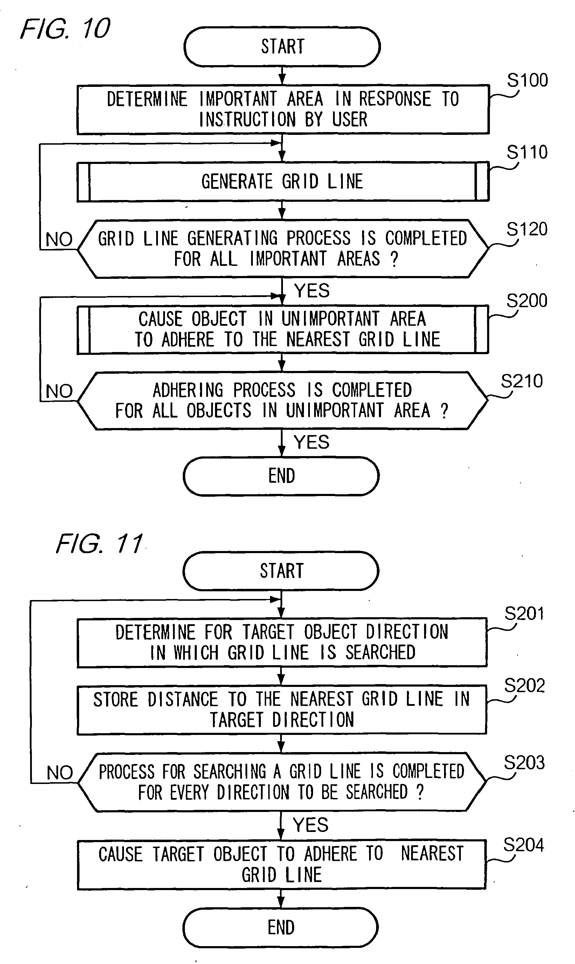

FIG. 10 shows a flowchart illustrating an operation of the document edit device 100 in accordance with the second embodiment. The processes in steps S100 - S120 are carried out similarly to the first embodiment. If it is determined that the grid line generating process is completed for all important areas (S120: YES), the CPU 110 proceeds to the operation in step S200. In step S200, the CPU 110 causes an object outside the important area (hereinafter, an area outside the important area is referred to as "unimportant area") to adhere to the nearest grid line from among grid lines included in the document. In step S210, the CPU 110 determines whether the adhering process is completed for all objects in the unimportant area. If it is determined that there is an object for which the adhering process is not completed (S210: NO), the CPU 110 updates a target object to be processed and repeats the operation in step S200. If it is determined that the adhering process is completed for all objects in the unimportant area (S210: YES), the CPU 110 terminates the operation shown in FIG. 10. After step S210, the generated grid lines may be displayed on the display 170 similarly to the first embodiment.

FIG. 11 shows a flowchart illustrating a detail of the adhering process in step S200. In step S201, the CPU 110 determines for the target object a direction in which a grid line is searched. In this example, it is determined to search a grid line in four directions, up, down, left and right of the object. Furthermore, the CPU 110 determines one direction as a target direction from among plural directions.

In step S202, the CPU 110 stores a distance to the nearest grid line in the target direction. Details are as follows. The CPU 110 searches a grid line starting from the object toward the target direction, and calculates a distance to the nearest grid line in the target direction. Then, the CPU 110 stores in the RAM 130 the calculated distance and an identifier of the target direction.

In step S203, the CPU 110 determines whether a process for searching a grid line is completed for every direction to be searched. If it is determined that there is a direction for which the search process is not completed (S203: NO), the CPU 110 updates the target direction and repeats the processes in steps S201 - S203.

If it is determined that the search process is completed for every direction to be searched (S203: YES), the CPU 110 causes the target object to adhere to the nearest grid line (step S204). It is to be noted that the CPU 110 may not cause the target object to adhere to the nearest grid line if a predetermined condition is satisfied. The condition may be, for example, that a distance from the target object to the grid line must be greater than a threshold, for example, height or width of the target object.

As described above, the present embodiment provides a grid line generated on the basis of the golden ratio and determining a position of an object by using the grid line. In other words, a user can determine a well-balanced, beautiful layout of the object.

3. Third embodiment

Next, a third embodiment of the invention will be described. In the following description, elements common with the first and the second embodiments will be omitted. Also, common reference numerals will be used for elements common with the first and the second embodiments. In the third embodiment, the important area is automatically specified by the document edit device 100.

FIG. 12 shows a flowchart illustrating an operation of the document edit device 100 in accordance with the third embodiment. This flow is different from the flow of FIG. 10 in a point that the important area is specified automatically or manually. In step S300, the CPU 110 determines an important area in the document. The important area may be determined on the basis of attribute information. In this case, the document includes attribute information for each object. The attribute information includes, for example, important information showing importance of an object, or category information showing category of the object. For example, the CPU 110 determines as the important area an object having the highest importance. Alternatively, the CPU 110 may determine the important area by using a known technology such as "attractivity".

4. Further embodiments

The invention is not limited to the above embodiments and may be practiced in various modifications.

In the above embodiments, the figure of an object is a quadrangle. However, the figure of an object is not restricted to a quadrangle. The figure of an object may be any kind of a figure as long as it is a specific figure, for example, an ellipse, $n$-gon ($n \geq 3$), or a combination thereof A reference line may be a side of a figure of an object, or a side of a circumscribed $n$-gon of an object. The circumscribed $n$-gon may be any kind of a figure, for example, a triangle or a quadrangle.

In the above embodiment, the reference lines are defined by the layout area (page) or an object. However, the reference line is not restricted to these lines. For example, a previously presented grid line may be used as a reference line for generating a new grid line. Also, in the above embodiment, two sets of sides of the blank area are used as reference lines for generating a grid line, but a single set of sides may be used as reference lines. Furthermore, in the above embodiment, two grid lines are generated by one set of reference lines, but a single grid line may be generated by one set of reference lines.

In the above embodiment, a single device has the functional elements shown in FIG. 1. However, a system having plural devices may have the same functional elements. In this case, a device has functions of the object obtaining unit 101 and the important area determining unit 102, and another device has a function of the rest, thereby the system totally has the functions shown in FIG. 1.

Two reference lines used for generating grid lines need not always be parallel to each other. Even if reference lines are not mutually parallel, the CPU 110 may generate grid lines which split the interval between the two reference lines, at the golden ratio.

In addition, the program for causing a computer device to execute the above process may be provided by a computer-readable storage medium such as a CD-ROM (Compact Disk Read Only Memory).

**Claims**

1. A document edit support device, comprising:

   obtaining means for obtaining an object, the object being data showing at least one of a text and an image included in a document to be edited;
   important area determining means for determining an important area, the important area being a part of an area of the document;
   grid line generating means for generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and
   display means for displaying the grid line generated by the grid line generating means.

2. The document edit support device according to Claim 1, wherein
   the document includes a plurality of objects, and
   the display means is configured to display the grid line if at least a part of the grid line overlaps with an object that is outside the important area.

3. The document edit support device according to Claim 1, wherein
   the document includes a plurality of objects, and
   the display means is configured to display the grid line if at least a part of the grid line overlaps an $n$ % magnified object ($n$ is a real number that satisfies $n > 0$).

4. The document edit support device according to Claim 1, wherein
   the document includes a plurality of objects,
   each object has attribute information showing an attribute of the object, and
   the important area determining means is configured to determine the important area on the basis of the attribute information, the important area including at least one of the plurality of objects.

5. The document edit support device according to Claim 1, wherein
the grid line generating means is configured to generate the grid line around the important area.

6. A document edit device, comprising:

the document edit support device according to any one of Claims 1-5, the document including a plurality of objects; and
editing means for editing a position of an object of the document so as to be tangent to the nearest grid line.

7. A document edit device, comprising:

the document edit support device according to any one of Claims 1-5, the document including a plurality of objects; and
editing means for editing a position of an object of the document in accordance with an instruction inputted by a user.

8. A program causing a computer device having display means to execute a process, the process comprising:

obtaining an object, the object being data showing at least one of a text and an image included in a document to be edited;
determining an important area, the important area being a part of an area of the document;
generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and
displaying on the display means the grid line.

9. A computer-readable storage medium storing a program causing a computer device having display means to execute a process, the process comprising:

obtaining an object, the object being data showing at least one of a text and an image included in a document to be edited;
determining an important area, the important area being a part of an area of the document;
generating a grid line, the grid line having a specific positional relationship with the important area determined by the important area determining means, the grid line dividing two reference lines at approximately golden ratio, each of the two reference lines being determined on the basis of at least one of a figure and a position of the object and a layout area, the layout area being an area in which an object is located in the document; and
displaying on the display means the grid line.

## FIG. 1

```
┌─────────────────────────────────────────┐
│                                          │  100
│   ┌─────────────────────────┐ 101        │
│   │  OBJECT OBTAINING UNIT   │            │
│   └─────────────────────────┘            │
│                                          │
│   ┌─────────────────────────┐ 102        │
│   │     IMPORTANT AREA       │            │
│   │    DETERMINING UNIT      │            │
│   └─────────────────────────┘            │
│                                          │
│   ┌─────────────────────────┐ 103        │
│   │   GRID LINE GENERATING   │            │
│   │          UNIT            │            │
│   └─────────────────────────┘            │
│                                          │
│   ┌─────────────────────────┐ 104        │
│   │      DISPLAY UNIT        │            │
│   └─────────────────────────┘            │
│                                          │
│   ┌─────────────────────────┐ 105        │
│   │     CHANGING UNIT        │            │
│   └─────────────────────────┘            │
│                                          │
└─────────────────────────────────────────┘
```

## FIG. 2

```
┌──────────────────────────────────────────────────────────────┐
│        ┌──────────┐ 110   ┌──────────┐ 120 130  ┌──────────┐  │
│        │   CPU    │       │   ROM    │          │   RAM    │  │
│        └──────────┘  190  └──────────┘          └──────────┘  │
│ 100                                                           │
│   ═══════════════════════════════════════════════════════    │
│ 140                                                           │
│   ┌──────────────────────────────────────────────────────┐   │
│   │                        I/F                           │   │
│   └──────────────────────────────────────────────────────┘   │
│     150         160              170            180           │
│ ┌────────┐ ┌────────────┐ ┌────────────┐ ┌──────────────┐    │
│ │  HDD   │ │ KEYBOARD/   │ │  DISPLAY   │ │  NETWORK IF  │    │
│ │        │ │   MOUSE     │ │            │ │              │    │
│ └────────┘ └────────────┘ └────────────┘ └──────────────┘    │
└──────────────────────────────────────────────────────────────┘
```

*FIG. 3*

START

DETERMINE IMPORTANT AREA IN RESPONSE TO INSTRUCTION BY USER — S100

GENERATE GRID LINE — S110

GRID LINE GENERATING PROCESS IS COMPLETED FOR ALL IMPORTANT AREAS ? — S120

NO

YES

DISPLAY GRID LINES — S130

END

*FIG. 4*

$P_1$   $D_1$   $P_2$

Work style innovation — $T_1$

— $T_2$

$P_3$   $P_4$

IMPORTANT AREA

$I_1$

*FIG. 5*

```
        ┌─────────────────┐
        │      START      │
        └─────────────────┘
                 │
    ┌────────────┘
    │   ┌─────────────────────────────────┐
    │   │ DETERMINE DIRECTION IN WHICH GRID │  S111
    │   │      LINE IS GENERATED           │
    │   └─────────────────────────────────┘
    │            │
    │   ┌─────────────────────────────────┐
    │   │ GENERATE GRID LINE WHICH DIVIDES │  S112
    │   │   BLANK AREA AT GOLDEN RATIO     │
    │   └─────────────────────────────────┘
    │            │
    │       ╱─────────────────────────╲
    │  NO  ╱  THE GRID LINE GENERATING  ╲  S113
    └─────〈       PROCESS IS COMPLETED   〉
          ╲      FOR ALL DIRECTIONS ?   ╱
           ╲─────────────────────────╱
                 │ YES
        ┌─────────────────┐
        │       END       │
        └─────────────────┘
```

*FIG. 6*

*FIG. 7*

IMPORTANT AREA

IMPORTANT AREA

Work style innovation

*FIG. 8*

DISPLAYED GRID LINE

UNDISPLAYED GRID LINE

Work style innovation

*FIG. 9*

DISPLAYED GRID LINE

m

G11

I3

G12

UNDISPLAYED GRID LINE

*FIG. 12*

START

↓

AUTOMATICALLY DETERMINE IMPORTANT AREA — S300

↓

GENERATE GRID LINE — S110

↓

GRID LINE GENERATING PROCESS IS COMPLETED FOR ALL IMPORTANT AREAS ? — S120

NO ↑

YES ↓

CAUSE OBJECT IN UNIMPORTANT AREA TO ADHERE TO THE NEAREST GRID LINE — S200

↓

ADHERING PROCESS IS COMPLETED FOR ALL OBJECTS IN UNIMPORTANT AREA ? — S210

NO ↑

YES ↓

END

## FIG. 10

```
                    ┌─────────────────┐
                    │      START      │
                    └─────────────────┘
                             │
        ┌────────────────────────────────────────────┐ S100
        │ DETERMINE IMPORTANT AREA IN RESPONSE TO     │
        │           INSTRUCTION BY USER               │
        └────────────────────────────────────────────┘
                             │
        ┌────────────────────────────────────────────┐ S110
        │              GENERATE GRID LINE             │
        └────────────────────────────────────────────┘
                             │
   NO  ╱ GRID LINE GENERATING PROCESS IS COMPLETED ╲  S120
  ◄────   FOR ALL IMPORTANT AREAS ?                ╱
        ╲_____╱
                        │ YES
        ┌────────────────────────────────────────────┐ S200
        │        CAUSE OBJECT IN UNIMPORTANT AREA     │
        │        TO ADHERE TO THE NEAREST GRID LINE   │
        └────────────────────────────────────────────┘
                             │
   NO  ╱        ADHERING PROCESS IS COMPLETED      ╲   S210
  ◄────   FOR ALL OBJECTS IN UNIMPORTANT AREA ?    ╱
        ╲_____╱
                        │ YES
                    ┌─────────────────┐
                    │       END       │
                    └─────────────────┘
```

## FIG. 11

```
                    ┌─────────────────┐
                    │      START      │
                    └─────────────────┘
                             │
        ┌────────────────────────────────────────────┐ S201
        │   DETERMINE FOR TARGET OBJECT DIRECTION     │
        │       IN WHICH GRID LINE IS SEARCHED        │
        └────────────────────────────────────────────┘
                             │
        ┌────────────────────────────────────────────┐ S202
        │  STORE DISTANCE TO THE NEAREST GRID LINE IN │
        │              TARGET DIRECTION               │
        └────────────────────────────────────────────┘
                             │
   NO  ╱ PROCESS FOR SEARCHING A GRID LINE IS COMPLETED ╲ S203
  ◄────   FOR EVERY DIRECTION TO BE SEARCHED ?          ╱
        ╲_____╱
                        │ YES
        ┌────────────────────────────────────────────┐ S204
        │   CAUSE TARGET OBJECT TO ADHERE TO NEAREST  │
        │               GRID LINE                     │
        └────────────────────────────────────────────┘
                             │
                    ┌─────────────────┐
                    │       END       │
                    └─────────────────┘
```

**EP 1 927 923 A2**

**REFERENCES CITED IN THE DESCRIPTION**

**Patent documents cited in the description**

- JP 8194832 A
- JP 2003523014 T
- JP 2006189989 A
- JP 64017156 A
- JP 3269678 A